# EUROPÄISCHE PATENTSCHRIFT

(11) **EP 0 902 868 B1**
(45) Veröffentlichungstag und Bekanntmachung des Hinweises auf die Patenterteilung: **28.02.2001**
(21) Anmeldenummer: 97923886.2
(22) Anmeldetag: 14.05.1997
(51) Int. Cl.: F16N 7/32, B05B 7/04

(54) **VORRICHTUNG ZUM AUFTEILEN EINER MITTELS EINER GASSTRÖMUNG TRANSPORTIERTEN VISKOSEN FLÜSSIGKEIT**
PROCESS FOR DIVIDING A VISCOUS LIQUID CONVEYED BY A FLOW OF GAS
PROCEDE POUR DIVISER UN FLUIDE VISQUEUX TRANSPORTE PAR UN FLUX GAZEUX

(30) Priorität: 04.06.1996 DE 19622379
(43) Veröffentlichungstag der Anmeldung: 24.03.1999
(73) Patentinhaber: Rebs Zentralschmiertechnik GmbH, 40885 Ratingen (DE)
(72) Erfinder: SCHWARZE, Hermann, D-42579 Heiligenhaus (DE); REBS, Alexander, D-40885 Ratingen (DE)
(74) Vertreter: Simons, Johannes, Dipl.-Ing.
(86) Internationale Anmeldenummer: EP9702452
(87) Internationale Veröffentlichungsnummer: WO9746825

(56) Entgegenhaltungen:
- DE-A- 4 039 169
- US-A- 3 052 318
- US-A- 5 253 733

## Beschreibung

Die Erfindung betrifft eine Vorrichtung zum Aufteilen einer mittels einer Gasströmung transportierten viskosen Flüssigkeit in eine Vielzahl von Teilströmen mit einer Zuströmbohrung, die sich in eine Vielzahl von Abströmbohrungen verzweigt, und mit einem rohrförmigen Gehäuse, an dessen beiden Stirnseiten jeweils eine Aufnahme ausgebildet ist, von denen die erste zur Aufnahme eines zuströmseitigen Anschlußelements und die zweite zur Aufnahme eines zweiten Anschlußelements bestimmt ist. Vorrichtungen dieser Art werden beispielsweise in Schmiersystemen an Walzwerken oder Schienenfahrzeugen eingesetzt. Üblicherweise wird dabei ein den jeweiligen Anforderungen genügendes Öl als Schmiermittel mittels eines Luftstromes transportiert. Im einzelnen beschrieben vird eine Vorrichtung dieser Art in dem US Patent 5 253 733.

In den Leitungen eines derartigen Schmiersystems bildet das Schmiermittel aufgrund einer koaxial zum Leitungsverlauf gerichteten turbulenten Gasströmung einen dünnen Film auf den Leitungswänden aus, der eine gleichmäßige Wellenstruktur aufweist. Dieser Schmierfilm wird aufgrund der Reibung zwischen den aneinander anliegenden Grenzschichten von Luft und Schmiermittel sowie das Aufprallen der Luftströmung auf die Wellenberge voran getrieben, ohne daß es zu einer Vermischung der Luft mit dem Schmiermittel kommt. Der wesentliche Vorteil eines derartigen Transports von Schmiermittel zu den Schmiermittelstellen besteht darin, daß der Transport auch kleinster Schmiermittelmengen lageunabhängig, insbesondere unbeeinflußt von der Schwerkraft erfolgen kann.

Im Hinblick auf-den leitungstechnischen Aufwand für den Aufbau eines Verteilersystems der voranstehend erläuterten Art wird gefordert, die benötigte Gesamtmenge an Schmiermittel über eine einzige Zuführleitung bis nahe zu den Schmierstellen zu fördern und erst kurz vor Erreichen der jeweiligen Schmierstellen auf eine den jeweiligen Schmierstellen entsprechende Anzahl von Teilströmen zu verteilen. Zu diesem Zweck ist in dem Europäischen Patent 0 010 269 beschrieben, den Gesamtstrom an Luft und Schmiermittel dadurch aufzuteilen, daß die Zuführleitung in einer zylindrischen Verteilkammer mündet, die eine Vielzahl von in ihre Umfangsfläche eingeformte, symmetrisch angeordnete Abströmbohrungen aufweist. Nach der vorbekannten Patentschrift soll durch die symmetrische Aufteilung der Abströmbohrungen eine Kompensation des Schwerkrafteinflusses erreicht werden.

Die bekannte Verteilvorrichtung hat die in sie gesetzten Erwartungen insofern nicht erfüllt, als daß bei ihrer praktischen Erprobung erhebliche Abweichungen des Volumens der in die Abströmbohrungen einströmenden Teilströme festgestellt wurden. Es stellte sich heraus, daß die gleichmäßige Aufrechterhaltung der für einen ordnungsgemäßen Transport erforderlichen turbulenten Strömung in allen Zu- und Abströmkanälen trotz eines erheblichen technischen Aufwands nur annähernd bewerkstelligt werden kann. Darüber hinaus besteht bei der bekannten Vorrichtung das Problem, daß sie aufgrund des großen für ihre Herstellung erforderlichen Bauraums sich nur unter Schwierigkeiten insbesondere nachträglich an bestehenden Anlagen einbauen läßt.

Bei der aus der US 5 253 733 bekannten Vorrichtung ist zwar die nachträgliche Montage in einem Maschinengerüst durch die spezielle Ausgestaltung des Gehäuses und der Aufnahme vereinfacht. Die praktische Erprobung derartiger Vorrichtungen zeigt jedoch, daß sich die Luft-/Schmierstoffströmung mit einer solchen Vorrichtung so wenig gleichmäßig auf die Abströmbohrung aufteilen läßt, daß es dazu kommen kann, daß die mit der bekannten Aufteilvorrichtung verbundenen Schmierstellen zum einem Teil mit einer zu geringen Schmierstoffmenge und zum anderen Teil mit einer zu hohen Schmierstoffmenge versorgt werden.

Ausgehend von dem voranstehend erläuterten Stand der Technik besteht die Aufgabe der Erfindung darin, eine Verteilvorrichtung zu schaffen, mit der mit geringem Aufwand eine gleichmäßige, von Schwerkrafteinflüssen unbeeinflußte Verteilung des Luft-/Schmiermittelstromes unter Aufrechterhaltung einer turbulenten Strömung in allen Abströmbohrungen möglich ist und die dazu geeignet ist, problemlos insbesondere nachträglich an bestehenden Anlagen montiert zu werden.

Diese Aufgabe wird bei einer Vorrichtung der eingangs genannten Art dadurch gelöst, daß die Zuströmbohrung in eine sich in Strömungsrichtung erweiternde Verteilkammer mündet, daß im Bereich des Übergangs von der Zuströmbohrung in die Verteilkammer eine umlaufende Abrißkante ausgebildet ist, und daß auf der dem Ende der Zuströmbohrung gegenüberliegenden Wand der Verteilkammer eine konzentrisch zur Endöffnung der Zuströmbohrung ausgerichtete Prallfläche ausgebildet ist, deren Durchmesser größer ist als der Durchmesser der Zuströmbohrung und um deren Umfang verteilt die Eingangsöffnungen der Abströhmbohrungen angeordnet sind.

Gemäß der Erfindung wird die in der Zuführleitung einströmende turbulente Gasströmung auf eine am Ende einer trichterförmig ausgebildeten Verteilkammer positionierte Prallfläche ausgerichtet. Um diese Prallfläche herum sind die Abströmbohrungen angeordnet. Das in die Verteilkammer einströmende und auf die Prallfläche treffende Gas bildet auf der Prallfläche zunächst eine radial ausgerichtete Prallströmung, die zum wesentlichen Teil an der Mantelfläche des Trichters in eine der Eintrittsströmung entgegengesetzte Mantelströmung umgelenkt wird. Der restliche Teil des Gasstroms dringt zu gleichen Teilen in die Abströmbohrungen ein.

Durch die Mantelströmung wird zunächst die aus der Einströmbohrung ausströmende viskose Flüssigkeit im Bereich des Eintritts der Verteilkammer gestaut, so daß ihr unkontrolliertes, schlierenartiges Eintreten verhindert ist. Der kontinuierlich in die Verteilkammer einströmende Gasstrom reißt aus dem Staubereich tröpfchenweise Flüssigkeit mit. Die Flüssigkeitströpfchen treffen mit dem Gasstrom auf die Prallfläche und werden auf dieser zu den Abströmbohrungen getrieben.

Da die Energie des in die Verteilkammer eintretenden Gasstroms im annähernd unverminderten Maße zum Aufstauen der Flüssigkeit zur Verfügung steht und auch die Bewegung der Flüssigkeit auf der Prallfläche zu den Abströmbohrungen von der energiereichen radial ausgerichteten Prallströmung bewirkt wird, spielen Schwerkrafteinflüsse bei der erfindungsgemäßen Vorrichtung keine Rolle mehr. Hierdurch ist es möglich, die erfindungsgemäße Verteilvorrichtung in jeder beliebigen Einbaulage bei unverändert gutem Verteilergebnis zu montieren.

Indem die erfindungsgemäße Vorrichtung zusätzlich mit einem rohrförmigen, zylindrischen Gehäuse ausgestattet ist, kann sie problemlos in eine entsprechend dimensionierte Bohrung eingeschoben werden, die gleichzeitig zur geschützten Führung der Zuström- und Abströmleitungen genutzt werden kann. Auf diese Weise kann die erfindungsgemäße Vorrichtung auch an ansonsten schwer zugänglichen oder räumlich begrenzten Stellen einer größeren Anlage montiert werden. So lassen sich beispielsweise Walzwerke oder ähnliche Anlagen auch nachträglich mit erfindungsgemäßen Vorrichtungen ohne größere Schwierigkeiten ausstatten.

Eine fertigungstechnisch einfach herzustellende erfindungsgemäße Vorrichtung ist dadurch gekennzeichnet, daß die Verteilkammer kegelförmig und die Prallfläche eben und kreisförmig ausgebildet ist und daß der Durchmesser der Prallfläche einem Vielfachen des Durchmessers der Zuströmbohrung entspricht.

Eine erhebliche Steigerung der Gleichmäßigkeit, mit der das Fluid auf die Abströmbohrungen verteilt wird, läßt sich dadurch erreichen, daß im Bereich des Übergangs von der Prallfläche und die Abströmbohrungen jeweils eine scharfkantige Drosselstelle ausgebildet ist. Dies ermöglicht es, einen Einfluß der Strömungswiderstände der sich an die Abströmbohrungen nachfolgenden Leitungen auszuschließen, was sich dadurch erreichen läßt, daß der Drosselwiderstand größer eingestellt wird, als der größte Strömungswiderstand der Leitungen. Durch den Ausschluß des Einfluß auch des Strömungswiderstandes der Leitungen ist sichergestellt, daß die Strömungen in den betreffenden, sich an die Abströmbohrungen anschließenden Leitungen unabhängig von der Menge und dem Druck stets stabil bleiben.

Ebenso ist es im Hinblick auf eine gleichmäßige Aufteilung der Flüssigkeit vorteilhaft, wenn die Mittelpunkte der Abströmbohrungen in regelmäßigen Abständen auf einem Kreis angeordnet sind. Bei einer solchen Ausgestaltung läßt sich zudem eine Drosselstelle auf einfache Weise dadurch verwirklichen, daß der Durchmesser des Kreises dem Durchmesser dem größten Durchmesser der Verteilkammer entspricht. In diesem Fall werden die Abströmbohrungen zum Teil vom stirnseitigen Rand der Verteilerkammerwand überdeckt, wodurch eine schrafkantige Drosselstelle im Bereich der Randkante gebildet ist.

Vorteilhaft im Zusammenhang mit dem gleichmäßigen Eintreten von Flüssigkeit in Einströmbohrungen ist es auch, wenn die Abströmbohrungen mit einer Einschnürung versehen sind. Unmittelbar hinter einer derartigen Einschnürung bildet sich ein Vakuum, durch welches das regelmäßige, tröpfchenweise Eintreten von Flüssigkeit in die Abströmbohrungen begünstigt wird.

Hinsichtlich des Ablösens der Gasströmung von der Flüssigkeitströmung beim Eintritt in die Verteilkammer ist es günstig, wenn die Kegelfläche der Verteilkammer gegenüber deren Längsachse um einen Winkel von 30° bis 90°, insbesondere von 60°, angewinkelt ist.

Zusätzlich begünstigt werden kann das Einströmen von Flüssigkeit in die Abströmbohrung dadurch, daß die Breite des zwischen jeweils zwei benachbarten Abströmbohrungen verbleibenden Stegs auf ein Minimum reduziert ist.

Hinsichtlich der Gestaltung des Gehäuses der erfindungsgemäßen Vorrichtung ist vorteilhaft, wenn in das zuströmseitige Anschlußelement die Zuströmbohrung und in diejenige seiner Stirnseiten, die im eingebauten Zustand in dem Gehäuse angeordnet ist, der sich erweiternde Abschnitt der Verteilkammer eingeformt ist.

Ebenso vorteilhaft ist es, die Prallfläche und die Abströmbohrungen an einem in das Gehäuse einschiebbaren Verteilerstück auszubilden. Dies gilt insbesondere dann, wenn das Verteilstück und das zweite Anschlußelement einstückig ausgebildet sind. Bei einer derartigen Ausgestaltung läßt sich die erfindungsgemäße Verteilvorrichtung aus nur drei wesentlichen Teilen zusammensetzen.

Nachfolgend wird die Erfindung anhand einer ein Ausführungsbeispiel darstellenden Zeichnung näher erläutert. Es zeigen:
- Fig. 1: eine erste Ausgestaltung einer Vorrichtung zum Verteilen eines durch einen Luftstrom transportierten Schmiermittels in einem achsialen Längsschnitt;

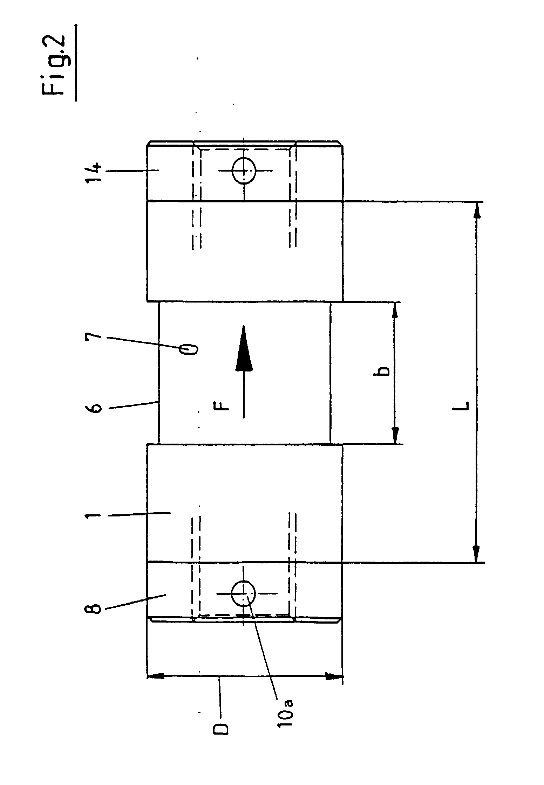

- Fig. 2: die Vorrichtung nach Fig. 1 in einer Ansicht von oben;

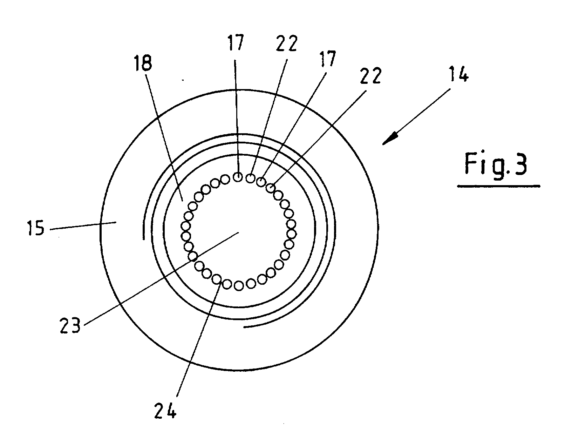

- Fig. 3: ein in der Vorrichtung nach den Fig. 1 und 2 eingesetztes Anschlußelement in frontaler Ansicht;

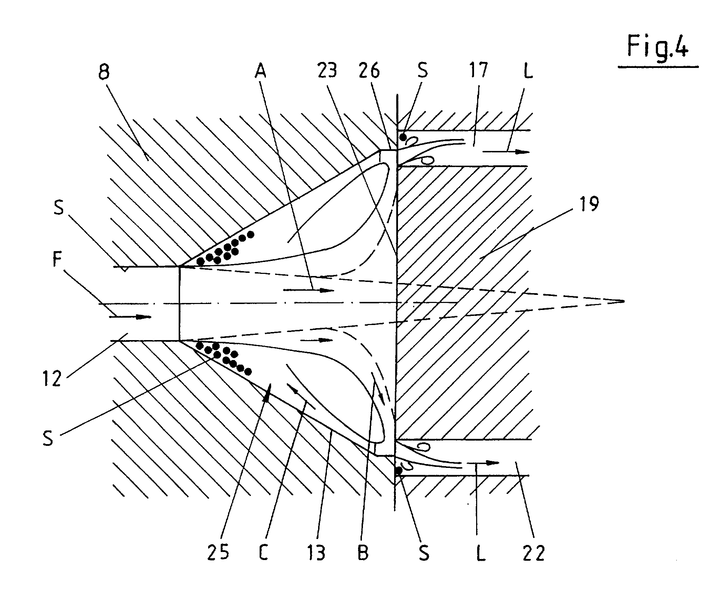

- Fig. 4: eine Verteilkammer der Vorrichtung nach den Fig. 1-3 in einer vergrößerten, ausschnittweisen Schnittdarstellung.

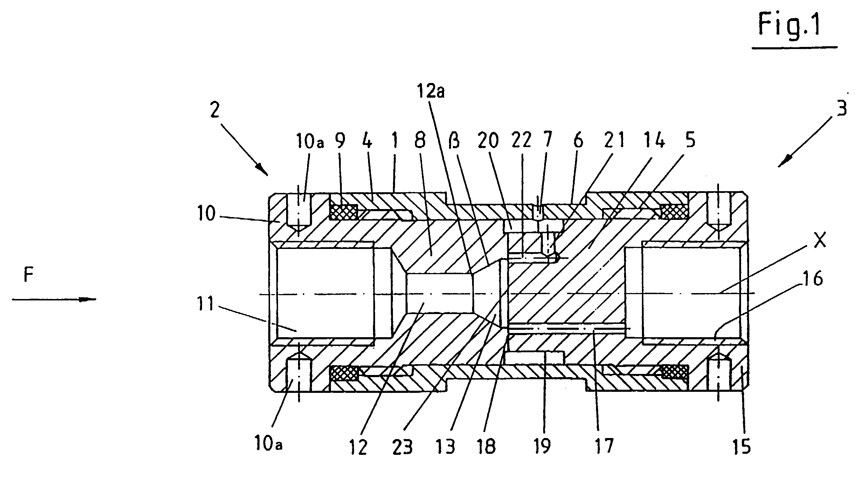

Die in Fig. 1 gezeigte Vorrichtung weist ein zylindrisches, rohrförmiges Gehäuse 1 auf. Ausgehend von der zuströmseitigen Stirnseite 2 und der abströmseitigen Stirnseite 3 des Gehäuses 1 sind Aufnahmen 4,5 in Form von Innengewinden in die Innenbohrung des Gehäuses 1 eingeformt. In seinem Mittelabschnitt weist das Gehäuse 1 eine umlaufende Nut 6 auf, deren Breite b annähernd einem Drittel der Länge L des Gehäuses 1 entspricht. Eine radial ausgerichtete Bohrung 7 verbindet die Nut 6 mit dem Innern des Gehäuses 1.

Ein ersten zuströmseitiges Anschlußelement 8 ist in die erste Aufnahme 4 des Gehäuses 1 eingeschraubt. Dabei dichtet ein O-Ring -9 die dem Anschlußelement 8 zugeordnete Öffnung des Gehäuses 1 gegenüber der Umgebung ab. Das Anschlußelement 8 weist eine Kopfplatte 10 auf, deren Durchmesser dem größten Durchmesser D des Gehäuses 1 entspricht. In die Umfangsfläche der Kopfplatte 10 sind Sacklöcher 10a eingeformt, die zum Ansetzen eines nicht gezeigten Montagewerkzeug dienen.

In die zuströmseitige Stirnseite des Anschlußelement 8 ist eine Gewindebohrung 11 eingeformt, in die der nicht gezeigte Anschlußnippel einer ebenfalls nicht gezeigten Zuströmleitung anschraubbar ist. Die Gewindebohrung 11 mündet in einer Zuströmbohrung 12. Die Zuströmbohrung 12 mündet in einem Trichter 13, der ausgehend von der im eingebauten in dem Gehäuse 1 gelegenen Stirnseite des Anschlußelements 8 in dieses eingeformt ist. Dabei ist zwischen dem Ende der Zuströmbohrung 12 am Eingang des Trichters 13 eine scharfe Abrißkante 12a ausgebildet. Der Durchmesser des Trichters 13 erweitert sich in Strömungsrichtung F, wobei seine Kegelflächen in einem Winkel β von 60° gegenüber der Längsachse X angewinkelt sind.

In die abströmseitig angeordnete Aufnahme 5 des Gehäuses 1 ist ein zweites Anschlußelement 14 eingeschraubt. Auch dieses Anschlußelement 14 weist eine Kopfplatte 15 auf, deren Durchmesser gleich dem größten Durchmesser D des Gehäuses 1 ist. Koaxial zu der Gewindebohrung 11 des ersten Anschlußelements 8 ist ausgehend von dessen abströmseitiger Stirnseite eine Gewindebohrung 16 in das Anschlußelement 14 eingeformt, in die der nicht gezeigte Anschlußnippel einer ebenfalls nicht gezeigten ersten Abströmleitung einschraubbar ist. Eine Mehrzahl von achsparallel zur Längsachse X des Gehäuses 1 ausgerichteten Abströmbohrungen 17 verbinden die im eingebauten Zustand in dem Gehäuse 1 angeordnete Stirnfläche 18 des Anschlußelements 14 mit der Gewindebohrung 16. Der vordere Abschnitt 19 des Anschlußelements 14 weist einen gegenüber dem Durchmesser der Gehäuseinnenbohrung verminderten Durchmesser auf, so daß bei eingebautem Anschlußelement 14 ein Ringkanal 20 zwischen der Wand des Gehäuses 1 und dem vorderen Abschnitt 19 des Anschlußelements 14 ausgebildet ist. Der Kanal 19 ist über die Bohrung 7 mit der Nut 6 verbunden.

In dem Ringkanal 20 münden die radial ausgerichteten Abschnitte 21 von Abströmbohrungen 22, die ausgehend von der Stirnfläche 18 des Anschlußelements 14 zunächst koaxial zur Längsachse X ausgerichtet sind, bis sie auf die radial ausgerichteten Abschnitte 21 treffen. Die Eintrittsöffnungen der Abströmbohrungen 22 sind in abwechselnder Reihenfolge mit den Eingangsöffnungen der Abströmbohrungen 17 auf der Stirnfläche 18 des Anschlußelements 14 angeordnet. Ihre Mittelpunkte liegen auf einem Kreis, dessen Durchmesser dem Durchmesser der größten Öffnung des Trichters 13 entspricht.

Konzentrisch zur Längsachse X ist auf der Stirnfläche 18 des Anschlußelements 14 eine ebene Prallfläche 23 ausgebildet, deren Durchmesser ein Vielfaches des Durchmessers der Zuströmbohrung 12 beträgt. Die Eingangsöffnungen der Abströmbohrungen 17,22 sind um die Prallfläche 23 herum so eng benachbart zueinander angeordnet, daß die Breite der Stege 24 zwischen den Abströmbohrungen 17,22 auf ein Minimum reduziert ist.

Im zusammengebauten Zustand liegt die Stirnwand 18 des Anschlußelements 14 dicht an der entsprechenden Stirnwand des Anschlußelements 8. Dabei bildet der Trichter 13 mit der Stirnwand 18 des Anschlußelements 14 eine Verteilkammer 25, in die die als Transportmedium beispielsweise eingesetzte Luftströmung A unter hoher Geschwindigkeit eintritt. Diese Luftströmung A trifft auf die Prallfläche 23, wo sie in die radial gerichtete Prallströmung B umgelenkt wird. Die Prallströmung B wird wiederum durch die Kegelflächen des Trichters 13 als Mantelströmung C in Richtung des Endes der Zuströmbohrung 12 geleitet, so daß das Schmiermittel S aufgestaut wird, welches auf den Innenwandungen der Zuströmbohrung 12 vorwärts transportiert wird. Das aufgestaute Schmiermittel S wird tröpfchenweise von dem nachströmenden Luftstrom A mitgerissen, so daß die Schmiermitteltröpfchen auf die Prallfläche 23 treffen. Auf der Prallfläche 23 werden die Schmiermitteltröpfchen durch die Prallstömung B radial nach außen zu den Eingangsöffnungen der Abströmbohrungen 17,22 getrieben. Die in die Eintrittsöffnungen hineinreichenden Kante 26 zwischen dem Trichter 13 und der Stirnseite des Anschlußelements 8 bildet dabei eine scharfe Abrißkante. Diese Abrißkante bewirkt, daß sich im Eingangsbereich der Abströmbohrungen 17,22 eine Totzone bildet, in der sich Schmiermitteltöpfchen S sammeln. Nachdem eine bestimmte Menge Schmiermittel S in der Totzone angesammelt ist, wird das Schmiermittel S durch den in die Abströmbohrungen eindringenden Luftstrom L entlang deren Wand gefördert.

Die Hälfte des auf diese Weise auf die Abströmbohrungen 17,22 gleichmäßig verteilten Schmiermittels S strömt über die Abströmbohrungen 17 zu der Gewindebohrung 16, während die andere Hälfte über die Abströmbohrungen 22 zu dem Abschnitt 19 und von dort aus zu der Bohrung 7 strömt.

## Patentansprüche

1. Vorrichtung zum Aufteilen einer mittels einer Gasströmung transportierten viskosen Flüssigkeit in eine Vielzahl von Teilströmen mit einer Zuströmbohrung (12), die sich in eine Vielzahl von Abströmbohrungen (17,22) verzweigt, und mit einem rohrförmigen Gehäuse (1), an dessen beiden Stirnseiten (2,3) jeweils eine Aufnahme (4,5) ausgebildet ist, von denen die erste zur Aufnahme . eines zuströmseitigen Anschlußelements (8) und die zweite zur Aufnahme eines zweiten Anschlußelements (14) bestimmt ist, **dadurch gekennzeichnet,**
- **daß** die Zuströmbohrung (12) in eine sich in Strömungsrichtung (F) erweiternde Verteilkammer (25) mündet,
- daß im Bereich des Übergangs von der Zuströmbohrung (12) in die Verteilkammer (25) eine umlaufende Abrißkante ausgebildet ist, und
- daß auf der dem Ende der Zuströmbohrung (12) gegenüberliegenden Wand (19) der Verteilkammer (25) eine konzentrisch zur Endöffnung der Zuströmbohrung (12) ausgerichtete Prallfläche (23) ausgebildet ist, deren Durchmesser größer ist als der Durchmesser der Zuströmbohrung (12) und um deren Umfang verteilt die Eingangsöffnungen der Abströmbohrungen (17,22) angeordnet sind.

2. Vorrichtung nach Anspruch 1, **dadurch gekennzeichnet, daß** die Verteilkammer (25) kegelförmig und die Prallfläche (23) eben und kreisförmig ausgebildet ist und daß der Durchmesser der Prallfläche (23) einem Vielfachen des Durchmessers der Zuströmbohrung (12) entspricht.

3. Vorrichtung nach einem der voranstehenden Ansprüche, **dadurch gekennzeichnet, daß** im Bereich des Übergangs von der Prallfläche (23) in die Abströmbohrungen (17,22) jeweils eine scharfkantige Drosselstelle (26) ausgebildet ist.

4. Vorrichtung nach einem der voranstehenden Ansprüche, **dadurch gekennzeichnet, daß** die Mittelpunkte der Eintrittsöffnungen der Abströmbohrungen (17,22) in regelmäßigen Abständen auf einem Kreis angeordnet sind.

5. Vorrichtung nach Anspruch 4, **dadurch gekennzeichnet, daß** der Durchmesser des Kreises dem Durchmesser dem größten Durchmesser der Verteilkammer (25) entspricht.

6. Vorrichtung nach einem der Ansprüche 2 bis 5, **dadurch gekennzeichnet, daß** die Kegelfläche der Verteilkammer (25) gegenüber deren Längsachse (X) um einen Winkel (β) von 30° bis 90°, insbesondere von 60°, angewinkelt ist.

7. Vorrichtung nach einem der voranstehenden Ansprüche, **dadurch gekennzeichnet, daß** die Abströmbohrungen (17,22) mit einer Einschnürung versehen sind.

8. Vorrichtung nach einem der voranstehenden Ansprüche, **dadurch gekennzeichnet, daß** die Breite des jeweils zwischen zwei benachbarten Abströmbohrungen (17,22) verbleibenden Stegs (24) auf ein Minimum reduziert ist.

9. Vorrichtung nach einem der voranstehenden Ansprüche, **dadurch gekennzeichnet, daß** die Abströmbohrungen (17,22) in Förderrichtung (F) hinter der Prallfläche (23) gruppenweise in gemeinsame Abströmkanäle (20) zusammengeführt sind.

10. Vorrichtung nach Anspruch 9, **dadurch gekennzeichnet, daß** sie wenigstens zwei Abströmkanäle (20) aufweist.

11. Vorrichtung nach einem der voranstehenden Ansprüche, **dadurch gekennzeichnet,** daß in das zuströmseitige Anschlußelement (8) die Zuströmbohrung (12) und in diejenige seiner Stirnseiten, die im eingebauten Zustand in dem Gehäuse (1) angeordnet ist, der sich erweiternde Abschnitt (13) der Verteilkammer (25) eingeformt ist.

12. Vorrichtung nach einem der voranstehenden Ansprüche, **dadurch gekennzeichnet, daß** die Prallfläche (23) und die Abströmbohrungen (17,22) an einem in das Gehäuse (1) einschiebbaren Verteilerstück ausgebildet sind.

13. Vorrichtung nach Anspruch 12, **dadurch gekennzeichnet, daß** mindestens ein Teil der Abströmbohrungen (22) in einer auf der Außenfläche des Verteilerstückes radial umlaufenden Nut mündet.

14. Vorrichtung nach einem der Ansprüche 12 oder 13, **dadurch gekennzeichnet, daß** das Verteilerstück und das zweite Anschlußelement (14) einstückig ausgebildet sind.

15. Vorrichtung nach einem der voranstehenden Ansprüche, **dadurch gekennzeichnet, daß** das Gas Stickstoff ist und die viskose Flüssigkeit ein fließfähiges Schmiermittel.

## Claims

1. A device for dividing a viscous liquid conveyed by a gas flow into a plurality of component flows, having an inflow bore (12) which branches into a plurality of outflow bores (17, 21), and a tubular casing (1) at each of whose end faces (2, 3) a receptacle (4, 5) is constructed, of which the first one is intended to receive an inflow side connecting element (8) and the second to receive a second connecting element (14),
**characterised in that**
- the inflow bore (12) discharges into a distributing chamber (25) widening in the direction of flow (F),
- a peripherally extending tear-off edge is constructed in the zone of the transition from the inflow bore (12) to the distributing chamber (25), and
- constructed on the wall (19) of the distributing chamber (25) opposite the end of the inflow bore (12) is a rebound surface (23) which is concentric with the end opening of the inflow bore (12) and whose diameter is greater than the diameter of the inflow bore (12) and distributed around whose periphery the inlet openings of the outflow bores (17, 22) are arranged.

2. A device according to claim 1,
**characterised in that** the distributing chamber (25) is constructed tapered and the rebound surface (23) flat and circular, and the diameter of the rebound surface (23) corresponds to a multiple of the diameter of the inflow bore (12).

3. A device according to one of the preceding claims, **characterised in that** in each case a sharp-edged restrictor (26) is constructed in the zone of the transition from the rebound surface (23) to the outflow bores (17, 22).

4. A device according to one of the preceding claims, **characterised in that** the centres of the inlet openings of the outflow bores (17, 22) are arranged at regular intervals on a circle.

5. A device according to claim 4,
**characterised in that** the diameter of the circle corresponds to the largest diameter of the distributing chamber (25).

6. A device according to one of claims 2 to 5,
**characterised in that** the conical surface of the distributing chamber (25) is angled in relation to its longitudinal axis (X) by an angle (β) of 30° to 90°, more particularly 60°.

7. A device according to one of the preceding claims, **characterised in that** the outflow bores (17, 22) have a waisting.

8. A device according to one of the preceding claims, **characterised in that** the width of each web (24) remaining between two adjacent outflow bores (17, 22) is reduced to a minimum.

9. A device according to one of the preceding claims, **characterised in that** downstream of the rebound surface (23) in the direction of conveying (F), the outflow bores (17, 22) are brought together in groups into common outflow channels (20).

10. A device according to claim 9,
**characterised in that** it has at least two outflow channels (22).

11. A device according to one of the preceding claims, **characterised in that** the inflow bore (12) is formed in the inflow side connecting element (8), and the widening portion (13) of the distributing chamber (25) is formed in that end face of the inflow side connecting element (8) which in the incorporated state is disposed in the casing (1).

12. A device according to one of the preceding claims, **characterised in that** the rebound surface (23) and the outflow bores (17, 22) are formed on a distributing member which can be inserted into the casing (1).

13. A device according to claim 12,
**characterised in that** at least a proportion of the outflow bores (22) discharge in a groove radially extending around on the outer surface of the distributing member.

14. A device according to one of claims 12 or 13,
**characterised in that** the distributing member and the second connecting element (14) are constructed in one piece.

15. A device according to one of the preceding claims, **characterised in that** the gas is nitrogen and the viscous liquid is a free-flowing lubricant.

## Revendications

1. Dispositif pour diviser un liquide visqueux transporté au moyen d'un courant de gaz en une pluralité de courants partiels, comprenant un orifice d'alimentation (12), qui se ramifie en une pluralité d'orifices d'évacuation (17, 22), et un boîtier tubulaire (1), sur les deux côtés frontaux (2, 3) duquel sont formés respectivement des logements (4, 5), dont le premier est destiné à la réception d'un élément de raccordement (8) côté alimentation et dont le second est destiné à la réception d'un second élément de raccordement (14), caractérisé en ce que :
- l'orifice d'alimentation (12) débouche dans une chambre de répartition (25) s'évasant dans la direction d'écoulement (F),
- une arête de rupture périphérique est formée dans la zone de transition entre l'orifice d'alimentation (12) et la chambre de répartition (25), et
- sur la paroi (19) de la chambre de répartition (25) faisant face à l'extrémité de l'orifice d'alimentation (12) est formée une surface d'impact (23) alignée concentriquement avec l'ouverture d'extrémité de l'orifice d'alimentation (12), dont le diamètre est plus grand que le diamètre de l'orifice d'alimentation (12) et sur la périphérie de laquelle les ouvertures d'entrée des orifices d'évacuation (17, 22) sont réparties.

2. Dispositif selon la revendication 1, caractérisé en ce que la chambre de répartition (25) a une forme conique et la surface d'impact (23) une forme plane et circulaire, et en ce que le diamètre de la surface d'impact (23) correspond à un multiple du diamètre de l'orifice d'alimentation (12).

3. Dispositif selon l'une quelconque des revendications précédentes, caractérisé en ce qu'il est formé des emplacements d'étranglement respectifs à arête vive (26) dans la zone de transition entre la surface d'impact (23) et les orifices d'évacuation (17, 22).

4. Dispositif selon l'une quelconque des revendications précédentes, caractérisé en ce que les points centraux des ouvertures d'entrée des orifices d'évacuation (17, 22) sont agencés à distances régulières sur un cercle.

5. Dispositif selon la revendication 4, caractérisé en ce que le diamètre du cercle correspond au plus grand diamètre de la chambre de répartition (25).

6. Dispositif selon l'une quelconque des revendications 2 à 5, caractérisé en ce que la surface conique de la chambre de répartition (25) fait par rapport à son axe longitudinal (X) un angle (β) de 30° à 90°, en particulier de 60°.

7. Dispositif selon l'une quelconque des revendications précédentes, caractérisé en ce que les orifices d'évacuation (17, 22) sont pourvus d'un resserrement.

8. Dispositif selon l'une quelconque des revendications précédentes, caractérisé en ce que la largeur de la barrette (24) subsistant respectivement entre deux orifices d'évacuation (17, 22) voisins est réduite à un minimum.

9. Dispositif selon l'une quelconque des revendications précédentes, caractérisé en ce que les orifices d'évacuation (17, 22) sont regroupés dans des canaux d'évacuation communs (20) dans le sens d'écoulement (F) derrière la surface d'impact (23).

10. Dispositif selon la revendication 9, caractérisé en ce qu'il présente au moins deux canaux d'évacuation (20).

11. Dispositif selon l'une quelconque des revendications précédentes, caractérisé en ce que l'orifice d'alimentation (12) est formé dans l'élément de raccordement (8) côté alimentation et la section évasée (13) de la chambre de distribution (25) dans celui des côtés frontaux qui est agencé à l'état encastré dans le boîtier (1).

12. Dispositif selon l'une quelconque des revendications précédentes, caractérisé en ce que la surface d'impact (23) et les orifices d'évacuation (17, 22) sont formés sur une pièce de distribution qui peut être insérée dans le boîtier (1).

13. Dispositif selon la revendication 12, caractérisé en ce qu'au moins une partie des orifices d'évacuation (22) débouche dans une rainure radiale et périphérique sur la surface externe de la pièce de distribution.

14. Dispositif selon l'une quelconque de la revendication 12 ou 13, caractérisé en ce que la pièce de distribution et le second élément de raccordement (14) sont formés d'une seule pièce.

15. Dispositif selon l'une quelconque des revendications précédentes, caractérisé en ce que le gaz est l'azote et le liquide visqueux est un lubrifiant coulant.
